# EUROPÄISCHE PATENTANMELDUNG

(11) **EP 0 829 505 A1**
(43) Veröffentlichungstag der Anmeldung: **18.03.1998**
(21) Anmeldenummer: 97115505.6
(22) Anmeldetag: 08.09.1997
(51) Int. Cl.: C08G 75/02, C08G 75/18

(54) **Lösliche Polyarylensulfoxide, ein Verfahren zu deren Herstellung und deren Verwendung**

(30) Priorität: 17.09.1996 DE 19637845; 17.04.1997 DE 19716016
(71) Anmelder: Ticona GmbH, 65926 Frankfurt am Main (DE)
(72) Erfinder: Disch, Stefan, Dr., 60599 Frankfurt (DE); Haubs, Michael, Dr., 55545 Bad Kreuznach (DE); Schönfeld, Axel, Dr., 65207 Wiesbaden (DE); Scheckenbach, Helmut, 63225 Langen (DE)

(57) **Zusammenfassung**

Gegenstand der Erfindung sind Polyarylensulfoxide, die in polaren organischen Lösungsmitteln löslich sind, ein Verfahren zu deren Herstellung sowie deren Verwendung. Lösliche Polyarylensulfoxide lassen sich durch homogene Teiloxidation von Polyarylensulfiden herstellen. Die homogene Teiloxidation wird dadurch erreicht, daß das Polyarylensulfid in fein verteilter Form in einem oxidationsstabilen Lösungsmittel dispergiert wird, ein mildes Oxidationsmittel langsam zugegeben wird und die Oxidation abgebrochen wird, sobald die Polymerketten einen einheitlichen Oxidationsgrad erreicht haben. Die teiloxidierten Polyarylensulfoxide eignen sich zur Herstellung von Beschichtungen und Formteilen, wie Fasern, Membranen, Folien und Vliesen.

## Beschreibung

Die Erfindung betrifft Polyarylensulfoxide, die in polaren organischen Lösungsmitteln löslich sind, sowie ein Verfahren zu deren Herstellung. Außerdem betrifft die Erfindung die Verwendung von löslichen Polyarylensulfoxiden zur Herstellung von Formteilen.

Polyarylensulfoxide können durch polymeranaloge Oxidation von Polyarylensulfiden erhalten werden. Unter polymeranalog versteht man die chemische Umwandlung eines Polymeren in ein anderes unter Erhalt der Kettenlange. Die bisher bekannten Polyarylensulfoxide lösen sich jedoch nur in starken mineralischen Säuren wie konzentrierter Salpetersäure oder starken organischen Säuren, z.B. Dichloressigsäure oder Trifluoressigsäure. Für zahlreiche technische Anwendungen, die Polymerlösungen erfordern, sind diese Lösungsmittel nicht geeignet. Ein Beispiel ist die Beschichtung von Formkörpern aus Lösung. Da starke Säuren korrosiv auf viele Formkörper aus Metall wirken und zum Abbau der Polymerketten führen können, sind sie als Lösungsmittel für Beschichtungssysteme ungeeignet.

Bekannt ist die Oxidation von Polyphenylensulfid zu Polyphenylensulfoxid mit Salpetersäure (US 3,303,087). Die erhaltenen Polyarylensulfoxide sind zwar in starken Säuren, jedoch nicht in polaren organischen Lösungsmitteln löslich.

Polyarylensulfoxide und ihre Herstellung durch die Oxidation von Polyarylenthioethern mit Ozon in einem flüssigen Suspensionsmedium sind ebenfalls bekannt (DE-4314735 A1 und DE 4314736 A1). Durch Variation der Menge an Ozon, der Reaktionsdauer und des Suspensionsmediums ist es möglich, den Oxidationsgrad einzustellen. Aber auch diese Polyarylensulfoxide sind in organischen Lösungsmitteln nicht löslich.

Schließlich wird die Oxidation von Polyarylensulfiden mit N₂O₄ beschrieben (WO 96/15178). Die Reaktion kann als direkte Gas-Festkörperreaktion erfolgen, es ist aber auch möglich, in einem inerten Suspensionsmittel zu arbeiten. Darüberhinaus kann die Reaktion in einer Flüssigkeit durchgeführt werden, in der sich das Reaktionsprodukt löst, beispielsweise Dichloressigsäure oder Trifluoressigsäure. Aus dieser Veröffentlichung sind auch teiloxidierte Polyarylensulfide bekannt, jedoch sind auch die teiloxidierten Polyarylensulfoxide - ebenso wie die zuvor genannten Reaktionsprodukte - in organischen Lösungsmitteln unlöslich.

Aufgabe der Erfindung war es, die bekannten Nachteile des Standes der Technik zu vermeiden.

Gegenstand der Erfindung ist ein lösliches, lineares oder verzweigtes Polyarylensulfoxid, das Arylensulfoxid-Einheiten (Ar-SO, Ar = Arylen) enthält und einen Oxidationsgrad von 20 bis 80 % aufweist. Es ist bei Temperaturen von -20 °C bis 100 °C, vorzugsweise von 0 °C bis 70 °C, insbesondere von 10 °C bis 55 °C, in polaren organischen Lösungsmitteln löslich, wobei die Löslichkeit mindestens 1 Gewichtsprozent, bevorzugt mindestens 10 Gewichtsprozent, beträgt. Die löslichen Polyarylensulfoxide weisen einen Oxidationsgrad von 20 % bis 80 %, vorzugsweise von 50 % bis 70 %, auf.

Ein weiterer Gegenstand der Erfindung ist ein modifiziertes Verfahren zur Herstellung von Polyarylensulfoxiden durch Oxidation von Polyarylensulfiden mit N₂O₄, wobei die Polyarylensulfide homogen teiloxidiert werden.

Schließlich ist die Verwendung der löslichen Polyarylensulfoxide Gegenstand der Erfindung.

Durch die Erfindung ist es gelungen, Polyarylensulfoxide herzustellen, die in organischen Lösungsmitteln löslich sind und ein genügend hohes Molekulargewicht besitzen. Die hierbei als Ausgangsmaterial verwendeten Polyarylensulfide werden homogen teiloxidiert. Definitionsgemäß besitzen bei einer homogenen Teiloxidation alle teiloxidierten Polymermoleküle den gleichen Oxidationsgrad.

Eine homogene Teiloxidation ist im allgemeinen bei Polyarylensulfiden nur schwer zu erreichen, da die als Ausgangsmaterialien eingesetzten Polyarylensulfide unter den Reaktionsbedingungen unlöslich sind. Dies führt dazu, daß die im Reaktionsmedium unlöslichen Polyarylensulfide an der Phasengrenze stärker oxidiert werden und man so bei einer Teiloxidation hochoxidierte neben wenig oxidierten Polyarylensulfoxidketten erhält. Die homogene Teiloxidation läßt sich aber dadurch erreichen, daß das fein verteilte Polyarylensulfid zunächst in einem Lösungsmittel dispergiert und dann unter starkem Rühren ein mildes Oxidationsmittel langsam zugegeben wird. Die Reaktionsmischung wird ohne weitere Zugabe von Oxidationsmittel nachgerührt, wobei das gesamte Polyarylensulfid unter Bildung von Polyarylensulfoxid in Lösung geht. Zur Isolierung des Polyarylensulfoxids wird die Reaktionslösung unter Rühren im allgemeinen auf die 10-fache Menge an Wasser gegeben, wobei das Polymere ausfällt. Es wird abfiltriert, mit Wasser gewaschen und bei 50 °C unter vermindertem Druck getrocknet. Es werden auf diese Weise Polyarylensulfoxide erhalten, die in polaren organischen Lösungsmitteln löslich sind. Der Oxidationsgrad, das heißt der Anteil der Schwefelatome, die zu Sulfoxidgruppen oxidiert wurden, beträgt 20 % bis 80 %, vorzugsweise 50 % bis 70 %.

Polyarylensulfide, insbesondere Polyphenylensulfid lassen sich auf Grundlage der Reaktion von dihalogenierten aromatischen Verbindungen mit Natriumsulfid nach EDMONDS und HILL (US 3,354,129) herstellen. Polyphenylensulfid und dessen Herstellung ist ferner in "Ullmann's Encyclopedia of Industrial Chemistry*"*, Volume A21 S.463-472,Verlag Chemie, Weinheim-New York 1992 beschrieben, worauf Bezug genommen wird. Prinzipiell können alle linearen und verzweigten Polyarylensulfide als Ausgangsmaterial für die Herstellung der Polyarylensulfoxide gemaß der Erfindung verwendet werden. Bevorzugt sind jedoch Polyarylensulfide, die unsubstituierte Aryleneinheiten enthalten, insbesondere Polyphenylensulfid, oder Aryleneinheiten, die mit nichtionischen Gruppen, z.B. Carbonsäurederivaten, Sulfonsäurederivaten, Alkyl-, Allyl-, Aryl-, Halogen-, Amino-, Nitro-, Cyano- oder Hydroxylgruppen substituiert sind.

Zur Herstellung der Polyarylensulfoxide gemäß der Erfindung sind im allgemeinen Polyarylensulfide geeignet, die eine mittlere Molmasse, Mₙ, bestimmt durch Gelpermeationschromatographie, von 4000 bis 4·10⁵ g/mol, vorzugsweise von 1·10⁴ bis 3·10⁵ g/mol und insbesondere von 2,5 ·10⁴ bis 2·10⁵ g/mol aufweisen.

Die Polyarylensulfide werden üblicherweise als feinverteilte Pulver eingesetzt, wobei die Partikelgröße im allgemeinen 0,1 µm bis 1 mm, vorzugsweise 1 µm bis 500 µm, insbesondere 1 µm bis 300 µm betragen soll. Es können auch Pulver mit größeren Partikelabmessungen verwendet werden. Bevorzugt werden poröse Pulver eingesetzt, deren innere Oberfläche 0,1 m²/g bis 500 m²/g, vorzugsweise 1 m²/g bis 50 m²/g, beträgt, die beispielsweise durch Umfällen hergestellt werden können.

Das Reaktionsmedium bei der homogenen Teiloxidation muß oxidationsstabil sein, zudem muß es das teiloxidierte Polyarylensulfid unter den Reaktionsbedingungen lösen. Geeignete Reaktionsmedien sind zum Beispiel Dichloressigsäure, Trichloressigsäure oder Trifluoressigsäure. Als mildes Oxidationsmittel wird N₂O₄ verwendet. Es wird im allgemeinen in Form einer Lösung in einem inerten Lösungsmittel oder als 100 %ige Substanz eingesetzt. Vorteilhaft erweist sich die Verwendung einer 20 %igen Lösung von N₂O₄ in Dichloressigsäure.

Im allgemeinen wird das Oxidationsmittel über einen Zeitraum von 2 Minuten bis 5 Stunden, vorzugsweise von 10 Minuten bis 60 Minuten, zugegeben, wobei es meist unterstöchiometrisch eingesetzt wird, d. h. 0,5 bis 1 Mol Oxidationsmittel pro Mol des im Polymeren gebundenen Schwefels. Es können aber auch überstöchiometrische Mengen an Oxidationsmittel verwendet werden. In diesem Fall muß die Reaktion rechtzeitig abgebrochen werden, damit der Oxidationsgrad nicht zu hoch wird.

Wichtig für die spätere Löslichkeit des Produkts in organischen Lösungsmitteln ist, daß das Polyarylensulfid nur teilweise oxidiert wird. Die Oxidationsreaktion muß abgebrochen werden, wenn das Polymer nach Beendigung der Oxidationsmittelzugabe und einer Nachrührzeit den gewünschten Oxidationsgrad erreicht hat, wobei sich das Reaktionsprodukt vollständig im Reaktions-Lösungsmittel löst. Die erforderliche Nachrührzeit hängt von der Reaktionstemperatur und der zugegebenen Menge an Oxidationsmittel ab, sie beträgt im allgemeinen 1 Minute bis 5 Stunden, vorzugsweise 5 Minuten bis 30 Minuten. Die einzelnen Polymermoleküle des Polyarylensulfoxids besitzen dann annähernd den gleichen, in den Ansprüchen genannten Oxidationsgrad, was einer homogenen Teiloxidation entspricht. Diese chemische Einheitlichkeit der Polymermoleküle ist eine weitere wichtige Voraussetzung für die Löslichkeit in organischen Lösungsmitteln. Wie sich aus der ¹H-NMR-spektroskopischen Analyse der Kettenstruktur ermitteln läßt, bestehen die Polymermoleküle der löslichen Polyarylensulfoxide im wesentlichen aus alternierenden Einheiten aus Sulfid- und Sulfoxidgruppen.

Die Herstellung der Polyarylensulfoxide kann bei Temperaturen von -30 °C bis 150 °C, vorzugsweise von -20 °C bis 50 °C und insbesondere von 0 °C bis 30 °C, durchgeführt werden. Die erforderliche Reaktionszeit hängt von der Temperatur, der Konzentration des Oxidationsmittels oder der Menge von Oxidationsmittel ab.

Wird Poly-1,4-phenylensulfid (PPS) als Ausgangsmaterial eingesetzt, werden die löslichen Verbindungen gemäß der Erfindung im allgemeinen dann erhalten, wenn die Reaktions-Temperatur bei ihrer Herstellung -20 °C bis 40 °C, vorzugsweise 0 °C bis 30 °C beträgt und ein Oxidationsgrad von 50 % bis 70 % vorliegt.

Bei der Oxidation des Polyarylensulfids zum Polyarylensulfoxid mit N₂O₄ wird das N₂O₄ zum N₂O₃ reduziert. Durch eine nachfolgende Oxidation, zum Beispiel mit Sauerstoff, kann dieses N₂O₃ wieder zum N₂O₄ zurückoxidiert werden, so daß es ausreichend ist, N₂O₄ in katalytischen Mengen einzusetzen.

Durch einen Inertgasstrom kann nach beendeter Oxidation das N₂O₄ aus der Lösung ausgetrieben, in einer Kühlvorrichtung auskondensiert und somit zurückgewonnen werden. Die Reaktion wird bevorzugt bei Normaldruck durchgeführt, sie kann jedoch auch unter Druck mit gasförmigem N₂O₄ durchgeführt werden, wobei die Gasatmosphäre zur Regeneration von N₂O₄ Sauerstoff enthalten kann.

Polare organische Lösungsmittel sind Dimethylsulfoxid (DMSO), N-alkylierte Säureamide, oder N-alkylierte cyclische Lactame oder Mischungen daraus. Besonders gut ist die Löslichkeit in N-Methyl-2-pyrrolidon (NMP), DMSO, Dimethylformamid und Dimethylacetamid. Im Falle des NMP kann der Lösungsvorgang bereits bei 20 °C und bei Normaldruck erfolgen.

Der Oxidationsgrad der gemäß der Erfindung hergestellten Polyarylensulfoxide wird durch bekannte Verfahren mit der ¹H-NMR-Spektroskopie in deuterierter Trifluoressigsäure und der Electron Spectroscopy for Chemical Analysis (ESCA) bestimmt. Während mit der ¹H-NMR-Spektroskopie der in der Probe vorliegende Oxidationsgrad nachgewiesen wird, wird mit Hilfe der ESCA der Oxidationsgrad an der Oberfläche ermittelt. Durch ¹H-NMR-Spektroskopie in deuterierter Trifluoressigsäure läßt sich aus dem Intensitätsverhältnis der Resonanzsignale die Struktur der Polyarylensulfide analysieren. Es wurde bei den Polyarylensulfoxiden gemäß der Erfindung gefunden, daß sie im wesentlichen aus alternierenden Einheiten von Sulfid- und Sulfoxidgruppen aufgebaut sind.

Die gemäß der Erfindung hergestellten Polyarylensulfoxide eigenen sich zur technischen Verarbeitung aus Lösung in polaren, organischen Lösungsmitteln. Sie sind besonders geeignet zur Herstellung von Formkörpern, wie Folien, Membranen, Vliesen, Fasern und zur Beschichtung von Formteilen. Die löslichen Polyarylensulfoxide bzw. Formkörper daraus können aber auch teilweise oder vollständig mit einem Oxidationsmittel, z.B. mit einer Lösung von Wasserstoffperoxid in Essigsäure, in Polyarylensulfone überführt werden. Das Polyarylensulfon kann je nach Oxidationsbedingungen außerdem Sulfid- oder Sulfoxid-Gruppen enthalten.

Aufgrund der Löslichkeit der Polyarylensulfoxide gemäß der Erfindung in polaren Lösungsmitteln ist die Beschichtung von Formteilen z.B. mittels Tauch- oder Sprühverfahren besonders einfach. Durch die nachfolgende Oxidation der aufgebrachten Schicht ist es möglich, Formteile mit außergewöhnlichen Oberflächeneigenschaften wie Temperatur- und Chemikalienresistenz zu erzeugen.

### Beispiele

1) 5,00 g Poly-1,4-phenylensulfid (®Fortron 0214 B1, Hersteller: Hoechst AG, Frankfurt, Deutschland) wurden bei 25 °C in 230 ml Dichloressigsäure aufgeschlämmt und durch Zugabe von insgesamt 7 ml einer 20 %igen Lösung von N₂O₄ in Dichloressigsäure oxidiert. Die Zugabe erfolgte in der Weise, daß zu Anfang 2 ml und danach im Abstand von 2 Minuten 1 ml der N₂O₄-Lösung hinzugefügt wurden, bis die Gesamtmenge der vorgesehenen N₂O₄-Lösung zugegeben war. Das Reaktionsgemisch wurde während der Zugabe stark gerührt. Nach beendeter Zugabe des Oxidationsmittels wurde 20 Minuten bei 25 °C nachgerührt, wobei sich das Polymer vollständig löste. Danach wurde die tiefgrüne Lösung durch langsames Eingießen in 4 l Eiswasser unter Rühren ausgefällt, wobei der Niederschlag fein verteilt wurde. Das Produkt wurde abgesaugt und für 20 Stunden bei 50 °C unter vermindertem Druck getrocknet. Das erhaltene Poly-1,4-phenylensulfoxid war bei 25 °C vollständig in NMP löslich.
   Ausbeute: 5,1 g Poly-1,4-phenylensulfoxid
   Oxidationszustand des Schwefels nach ESCA: Sulfid 40 %, Sulfoxid 60 %
   ¹H-NMR-spektroskopische Analyse mit einem MSL 360 der Fa. Bruker (Ettlingen, Deutschland) bei 360 MHz in Trifluoressigsäure-d1:
   Oxidationsgrad: 57 %; Kettensequenzen: 15,7 % Sulfoxid-Sulfoxid-Einheiten, 81,8 % Sulfoxid-Sulfid-Einheiten, 2,5 % Sulfid-Sulfid-Einheiten.
2) (Vergleichsbeispiel): 100 g Poly-1,4-phenylensulfid (Fortron 0214 B1) wurden bei 5 °C langsam zu 600 ml 65 %iger, wäßriger Salpetersäure portionsweise zugegeben, wobei während der Zugabe gerührt wurde. Nach der Zugabe wurde langsam auf 60 °C erhitzt. Die Suspension wurde für 45 Minuten bei dieser Temperatur gehalten. Danach wurde das Reaktionsgemisch in 2 l Wasser gegeben und die suspendierten Partikel abgesaugt. Das Produkt wurde mit Wasser neutral gewaschen und bei 80 °C unter vermindertem Druck getrocknet.
   Ausbeute : 114 g Poly-1,4-phenylensulfoxid
   Oxidationszustand des Schwefels nach ESCA: Sulfid 3 %, Sulfoxid 97 %
   Das Produkt war unter Normaldruck weder bei 25 °C noch bei der Siedetemperatur in NMP löslich, es war jedoch in Trifluoressigsäure teilweise löslich.
3) (Vergleichsbeipiel): In einer temperierbaren Blasensäule (5 cm Durchmesser, 120cm Länge) wurden 200 g eines Poly-1,4-phenylensulfid-Pulvers (Fortron 0214 B1) in einer Mischung aus 850 ml Eisessig und 8,5 ml Schwefelsäure suspendiert. Bei 25 °C wurde die Säule über eine Glasfritte mit einem Ozon-haltigen Luftstrom (Strömungsgeschwindigkeit 150 l/h) mit einer mittleren Konzentration von 80 g Ozon pro Kubikmeter Gas begast. Nach 80 Minuten wurde die Reaktion nach Aufnahme von 52 g Ozon abgebrochen. Das Polymerpulver wurde abfiltriert, mehrmals mit Wasser gewaschen und bei 50 °C unter vermindertem Druck für 5 h getrocknet.
   Oxidationszustand des Schwefels nach ESCA: Sulfid 45 %, Sulfoxid 55 %
   Das Produkt war weder in NMP noch in Trifluoressigsäure löslich.
4) (Vergleichsbeispiel): In einem Reaktionsgefäß wurden 3 g eines Poly-1,4-phenylensulfid-Pulvers (Fortron 0214 B1) in 5 ml N₂O₄ bei einer Temperatur von 50 °C für 1 Stunde zur Reaktion gebracht. Nach der Reaktion wurde das Polymerpulver von N₂O₄ abgetrennt und getrocknet. Tg: 240 C, Tm> 370 °C (Zersetzung)
   Das Produkt war nicht in NMP, jedoch in Trifluoressigsäure teilweise löslich.
   Oxidationszustand des Schwefels nach ESCA: Sulfid 2 %, Sulfoxid 98 %
5) (Vergleichsbeispiel): Beispiel 1 wurde wiederholt mit dem Unterschied, daß die Reaktionstemperatur und die Temperatur während des Nachrührvorgangs jeweils auf 50 °C erhöht wurde.
   Das erhaltene Poly-1,4-phenylensulfoxid war unter Normaldruck weder bei 25 °C noch bei Temperaturen bis 100 °C in NMP löslich.
   Ausbeute: 4,8 g Poly-1,4-phenylensulfoxid
   Oxidationszustand des Schwefels nach ESCA: Sulfid 22 %, Sulfoxid 78 %
6) (Herstellung einer Faser): 1,5 g des Reaktionsproduktes aus Beispiel 1 wurden unter Rühren in 8 g NMP bei 25 °C gelöst. Mit einem Glasstab wurde aus der Lösung eine 20 cm lange Faser gezogen. Die frei hängende Faser wurde bei 120 °C und 3 mbar vom Lösungsmittel befreit. Die Dicke der Faser betrug nach dem Trocknen 20 µm. Die Faser wurde für 30 Minuten bei 65 °C in eine Lösung von 20 ml 50 %igem Wasserstoffperoxid in 40 ml Essigsäure (100 %ig) unter Zugabe von 1 ml konz. H₂SO₄ eingetaucht und danach bei 150 °C und 3 mbar getrocknet.
   Oxidationszustand des Schwefels in der Faser nach ESCA: Sulfid 4 %, Sulfoxid 14 %, Sulfon 82 %
   DSC: T_{g}=350 °C, Tₘ >550 °C (Zersetzung)
7) (Beschichtung eines Formteils): Ein zylinderförmiges Formteil aus Aluminium mit einer Länge von 5 cm und einem Durchmesser von 1 cm wurde in eine Lösung von 5 g des Reaktionsproduktes aus Beispiel 1 in 50 g NMP eingetaucht. Das Formteil wurde aus der Lösung entfernt und bei 120 °C und 3 mbar getrocknet. Bei diesem Vorgang überzog sich das Formteil mit einer Polyphenylensulfoxid-Schicht von ca 10 µm. Der beschichtete Aluminiumstab wurde für 30 Minuten bei 65 °C in eine Lösung von 20 ml 50 %igem Wasserstoffperoxid in 40 ml Essigsäure (100 %ig) unter Zusatz von 1ml konz. H₂SO₄ eingetaucht und danach bei 150 °C und 3 mbar getrocknet.
   Oxidationszustand des Schwefels der Beschichtung nach ESCA: Sulfid 4 %, Sulfoxid 28 %, Sulfon 68 %

## Patentansprüche

1. Lösliches, lineares oder verzweigtes Polyarylensulfoxid, das Arylensulfoxid-Einheiten (Ar-SO, Ar = Arylen) enthält und einen Oxidationsgrad von 20 bis 80 % aufweist.

2. Polyarylensulfoxid nach Anspruch 1, dadurch gekennzeichnet, daß der Oxidationsgrad 50 bis 70 % beträgt.

3. Polyarylensulfoxid nach Anspruch 1 oder 2, dadurch gekennzeichnet, daß es in einem polaren organischen Lösungsmittel löslich ist.

4. Polyarylensulfoxid nach Anspruch 3, dadurch gekennzeichnet, daß das Lösungsmittel Dimethylsulfoxid, N-alkyliertes Säureamid, N-alkyliertes cyclisches Lactam oder eine Mischung daraus ist, vorzugsweise N-Methyl-2-pyrrolidon, Dimethylsulfoxid, Dimethylformamid und Dimethylacetamid.

5. Polyarylensulfoxid nach einem oder mehreren der Ansprüche 1 bis 4, dadurch gekennzeichnet, daß die Löslichkeit mindestens 1 Gew.-%, vorzugsweise mindestens 10 Gew.-% beträgt.

6. Polyarylensulfoxid nach einem oder mehreren der Ansprüche 1 bis 5, dadurch gekennzeichnet, daß die Polymermoleküle des Polyarylensulfoxids annähernd den gleichen Oxidationsgrad besitzen und im wesentlichen aus alternierenden Einheiten aus Sulfid- und Sulfoxidgruppen bestehen.

7. Polyarylensulfoxid nach einem oder mehreren der Ansprüche 1 bis 6, dadurch gekennzeichnet, daß die Aryleneinheiten unsubstituiert oder mit nichtionischen Gruppen, insbesondere Carbonsäurederivaten, Sulfonsäurederivaten, Alkyl-, Allyl-, Aryl-, Halogen-, Amino-, Nitro-, Cyano- oder Hydroxylgruppen substituiert sind.

8. Polyarylensulfoxid nach einem oder mehreren der Ansprüche 1 bis 7, dadurch gekennzeichnet, daß als Arylen-Einheit Phenylen enthalten ist.

9. Verfahren zur Herstellung eines löslichen, linearen oder verzweigten Polyarylensulfoxids, das Arylensulfoxid-Einheiten (Ar-SO, Ar = Arylen) enthält, dadurch gekennzeichnet, daß ein Polyarylensulfid in einem oxidationsstabilen Reaktionsmedium mit N₂O₄ als Oxidationsmittel homogen teiloxidiert wird, wobei der Oxidationsgrad 20 bis 80 % beträgt.

10. Verfahren nach Anspruch 9, dadurch gekennzeichnet, daß das Oxidationsmittel in Form einer Lösung in einem inerten Lösungsmittel oder als 100 %ige Substanz eingesetzt wird.

11. Verfahren nach Anspruch 9, dadurch gekennzeichnet, daß als Reaktionsmedium Dichloressigsäure, Trichloressigsäure oder Trifluoressigsäure eingesetzt wird.

12. Verfahren nach Anspruch 10, dadurch gekennzeichnet, daß das N₂O₄ in Dichloressigsäure als inertem Lösungsmittel, vorzugsweise als 20 %ige Lösung eingesetzt wird.

13. Verfahren nach einem oder mehreren der Ansprüche 9 bis 12, dadurch gekennzeichnet, daß feinverteiltes Polyarylensulfid in einem Lösungsmittel dispergiert, dann N₂O₄ unter starkem Rühren langsam zugegeben wird, worauf die Reaktionsmischung ohne weitere Zugabe von Oxidationsmittel nachgerührt wird, wobei das gesamte Polyarylensulfid unter Bildung des Polyarylensulfoxids in Lösung geht und anschließend das Polyarylensulfoxid isoliert wird.

14. Verfahren nach einem oder mehreren der Ansprüche 9 bis 13, dadurch gekennzeichnet, daß Polyarylensulfid mit einer Partikelgröße von 0,1 µm bis 1 mm, vorzugsweise 1 µm bis 500 µm und einer inneren Oberfläche von 0,1 bis 500 m²/g, vorzugsweise 1 bis 50 m²/g eingesetzt wird.

15. Verfahren nach einem oder mehreren der Ansprüche 9 bis 14, dadurch gekennzeichnet, daß ein Polyarylensulfid mit einer mittleren Molmasse Mₙ von 4000 bis 4·10⁵ g/mol und insbesondere von 2,5·10⁴ bis 2·10⁵ g/mol, bestimmt durch Gelpermeationschromatographie, eingesetzt wird.

16. Verfahren nach einem oder mehreren der Ansprüche 9 bis 15, dadurch gekennzeichnet, daß das Oxidationsmittel in einem Zeitraum von 2 Minuten bis 5 Stunden, vorzugsweise 10 bis 60 Minuten zugegeben wird und die Nachrührzeit 1 Minute bis 5 Stunden, vorzugsweise 5 bis 30 Minuten beträgt.

17. Verfahren nach einem oder mehreren der Ansprüche 9 bis 16, dadurch gekennzeichnet, daß die Oxidation bei -30°C bis 150°C, vorzugsweise bei -20°C bis 50°C und insbesondere bei 0°C bis 30°C durchgeführt wird.

18. Verfahren nach einem oder mehreren der Ansprüche 9 bis 17, dadurch gekennzeichnet, daß Poly-1,4-phenylensulfid als Polyarylensulfid eingesetzt wird, wobei die Reaktionstemperatur bei der Oxidation -20°C bis 40°C, vorzugsweise 0°C bis 30°C und der Oxidationsgrad 50 bis 70 % beträgt.

19. Verwendung des Polyarylensulfoxids nach Anspruch 1 zur Herstellung von Formkörpern und zur Beschichtung von Formteilen.

20. Verwendung nach Anspruch 19 in Form von Folien, Membranen, Vliesen und Fasern.
